**Europäisches Patentamt**

**European Patent Office**

**Office européen des brevets**

(11) Veröffentlichungsnummer: **0 220 496**
A2

# (12) EUROPÄISCHE PATENTANMELDUNG

(21) Anmeldenummer: **86113134.0**

(51) Int. Cl.⁴: **B 29 C 45/32**

(22) Anmeldetag: **24.09.86**

(30) Priorität: **26.09.85 DE 3534255**

(43) Veröffentlichungstag der Anmeldung: **06.05.87**
**Patentblatt 87/19**

(84) Benannte Vertragsstaaten: **AT BE CH FR GB IT LI LU NL SE**

(71) Anmelder: **Stübbe GmbH, Ismaninger Str. 67a, D-8000 München 80 (DE)**

(72) Erfinder: **Kaaden, Hans-Heinrich, Friedrich-Herschel-Strasse 5, D-8000 München 80 (DE)**

(74) Vertreter: **Schirmer, Siegfried, Osningstrasse 10, D-4800 Bielefeld 1 (DE)**

(54) **Spritzgiessmaschine zum Herstellen von Kunststoffteilen im Spritzgiess- oder Reaktionsspritzgiessverfahren.**

(57) Die aus dem Hauptpatent 34 28 780 bekannte Spritzgießmaschine besitzt eine mittlere geteilte Formaufspannplatte. Durch Lösen der Schnellspannvorrichtung können die beiden Plattenteile mit je einer Formhälfte seitlich verfahren und dadurch das Schmelzeleitsystem beidseitig zugängig gemacht werden.

Mit der vorliegenden Erfindung erfolgt eine Erweiterung dahingehend, daß das Abspritzen nur jeweils einer Form oder das gleichzeitige Abspritzen von zwei Formen unterschiedlicher Gestaltung möglich ist. Hierzu ist die mittlere bewegbare Formaufspannplatte dreigeteilt ausgebildet und zwischen den drei Teilen das Schmelzeleitsystem angeordnet. Die dreigeteilte mittlere Formaufspannplatte kann durch eine oder mehrere Schnellspannvorrichtung(en) zu einer Einheit zusammengespannt werden.

Patentanwalt
**Dipl.-Ing. Siegfried Schirmer**
Zugelassener Vertreter
vor dem Europäischen Patentamt

Osningstraße 10
4800 Bielefeld 1
Telefon (05 21) 29 57 62
18.09.1986
754/58-98

0220496

– 1 –

Anmelder:
Stübbe GmbH
Ismaninger Straße 67 a
8000 München 80

## Spritzgießmaschine zum Herstellen von Kunststoffteilen im Spritzgieß- oder Reaktionsspritzgießverfahren

Die Erfindung betrifft eine Spritzgießmaschine zum Herstellen von Kunststoffteilen aus Thermoplasten, Duroplasten und/oder Elastomeren im Spritzgießverfahren oder Reaktionsspritzgießverfahren, mit einer Mehrstationen-Schließeinheit in horizontaler oder vertikaler Bauweise zur Aufnahme mehrerer Formen und mit einer zugeordneten Spritzeinheit zum gleichzeitigen Abspritzen der Formen, mit zwei äußeren Formaufspannplatten, von denen die eine in Schließrichtung auf Führungselementen bewegbar angeordnet und mit einem zwischen den beiden Formaufspannplatten auf Führungselementen bewegbar angeordneten mittleren Formaufnahmeteil, das mit einem beheizbaren Schmelzeleitsystem mit Angußdüsen versehen und an dem beidseitig je eine Formhälfte einer Form befestigt ist, wobei das mittlere Formaufnahmeteil für eine Aufnahme größerer Formhälften als längs zur Schließrichtung geteilte Formaufspannplatte ausgebildet ist, deren beide Teile durch eine Schnellspannvorrichtung zusammengehalten sind und zwischen deren beiden Teilen das Schmelzeleitsystem angeordnet ist und an der mittleren Formaufspannplatte gesonderte Fahrzylinder befestigt sind.

– 2 –

Mit der aus dem Hauptpatent bekannten Spritzgießmaschine können größere Teile, insbesondere Karosserieteile aus Kunststoff im Spritzgießverfahren oder
Reaktionsspritzgießverfahren äußerst wirtschaftlich
hergestellt werden. Durch Lösen der Schnellspannvorrichtung können die beiden Plattenteile der mittleren geteilten Formaufspannplatte mit je einer Formhälfte seitlich verfahren werden, wodurch das Schmelzeleitsystem völlig freigelegt und damit beidseitig
zugängig ist.

Über die mittlere geteilte Formaufspannplatte ist
das gleichzeitige Abspritzen zweier identischer Formen möglich.

Durch die vorliegende Erfindung soll eine Verbesserung
der geteilten mittleren Formaufspannplatte dahingehend vorgenommen werden, daß das Abspritzen nur jeweils einer Form oder das gleichzeitige Abspritzen
von zwei Formen unterschiedlicher Gestaltung möglich
ist.

Diese Aufgabe wird erfindungsgemäß dadurch gelöst,
daß die mittlere bewegbare Formaufspannplatte dreigeteilt ausgebildet und zwischen den drei Teilen das
Schmelzeleitsystem angeordnet ist. In Ausgestaltung
der Erfindung kann jedem Teil des Schmelzeleitsystems
eine gesonderte Spritzeinheit zugeordnet sein. Vorteilhafterweise ist die dreigeteilte Formaufspannplatte durch eine oder mehrere Schnellspannvorrichtung(en) zu einer Einheit zusammengespannt. Es besteht die Möglichkeit, das Schmelzeleitsystem in Form von Schmelzeleitschienen auszubilden.

Durch die erfindungsgemäße Dreiteilung der mittleren bewegbaren Formaufspannplatte ist die Möglichkeit gegeben, jedes Schmelzeleitsystem an eine Spritzeinheit anzuschließen und die jeweils zugeordnete Form gesondert auszuspritzen. Außerdem besteht die Möglichkeit, über die mittlere Formaufspannplatte gleichzeitig zwei unterschiedliche Formen auszuspritzen.

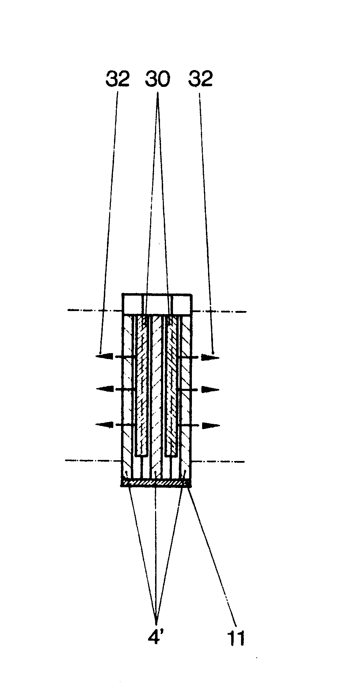

Ein Ausführungsbeispiel der Erfindung ist in der Zeichnung dargestellt und wird im folgenden näher erläutert. Die einzige Figur zeigt einen Vertikalschnitt durch eine mittlere bewegbare Formaufspannplatte.

Wie die Figur zeigt, besteht die mittlere bewegbare Formaufspannplatte 4' aus drei Teilen, zwischen denen das Schmelzeleitsystem 30 angeordnet ist. Die Formaufspannplatte 4' ist über eine oder mehrere nicht dargestellte Schnellspannvorrichtung(en) zu einer Einheit zusammengespannt. Mit 32 sind die Düsen und mit 11 ist das Lager für die bewegbare mittlere Formaufspannplatte bezeichnet.

- Patentansprüche -

- 4 -

**Patentanwalt**
**Dipl.-Ing. Siegfried Schirmer**
Zugelassener Vertreter
vor dem Europäischen Patentamt

0220496
Osningstraße 10
4800 Bielefeld 1
Telefon (05 21) 29 57 62

18.09.1986
754/58-98

Anmelder:
**Stübbe GmbH**
**Ismaninger Straße 67 a**
**8000 München 80**

**Patentansprüche:**

1. Spritzgießmaschine zum Herstellen von Kunststoffteilen aus Thermoplasten, Duroplasten und/oder Elastomeren im Spritzgießverfahren oder Reaktionsspritzgießverfahren, mit einer Mehrstationen-Schließeinheit in horizontaler oder vertikaler Bauweise zur Aufnahme mehrerer Formen und mit einer zugeordneten Spritzeinheit zum gleichzeitigen Abspritzen der Formen, mit zwei äußeren Formaufspannplatten, von denen die eine in Schließrichtung auf Führungselementen bewegbar angeordnet und mit einem zwischen den beiden Formaufspannplatten auf Führungselementen bewegbar angeordneten mittleren Formaufnahmeteil, das mit einem beheizbaren Schmelzeleitsystem mit Angußdüsen versehen und an dem beidseitig je eine Formhälfte einer Form befestigt ist, wobei das mittlere Formaufnahmeteil für eine Aufnahme größerer Formhälften als längs zur Schließrichtung geteilte Formaufspannplatte ausgebildet ist, deren beide Teile durch eine Schnellspannvorrichtung zusammengehalten sind und zwischen deren beiden Teilen das Schmelzeleitsystem angeordnet ist und an der mittleren Formaufspannplatte gesonderte Fahrzylinder befestigt sind, dadurch gekennzeichnet, daß die mittlere bewegbare Formaufspannplatte (4') dreigeteilt ausgebildet und zwischen den drei Teilen das Schmelzeleitsystem (30) angeordnet ist.

2. Spritzgießmaschine nach Anspruch 1, dadurch gekennzeichnet, daß jedem Teil des Schmelzeleitsystems (30) eine gesonderte Spritzeinheit zugeordnet ist.

3. Spritzgießmaschine nach Anspruch 1 oder 2, dadurch gekennzeichnet, daß die dreigeteilte Formaufspannplatte (4') durch eine oder mehrere Schnellspannvorrichtungen zu einer Einheit zusammengespannt ist.

4. Spritzgießmaschine nach einem der Ansprüche 1 bis 3, dadurch gekennzeichnet, daß das Schmelzeleitsystem (30) in Form von Schmelzeleitschienen ausgebildet ist.

32  30  32

4'      11